# EUROPEAN PATENT APPLICATION

(11) **EP 3 199 224 A1**
(43) Date of publication of application: **02.08.2017**
(21) Application number: 16847606.7
(22) Date of filing: 23.09.2016
(51) Int. Cl.: B01D 53/78, B01D 53/18, B01D 53/50

(54) **EXHAUST GAS TREATMENT DEVICE AND METHOD FOR EXTRACTING SEGMENT OF STEM PIPE FROM ABSORPTION COLUMN**

(30) Priority: 17.11.2015 JP 2015224926
(71) Applicant: Fuji Electric Co., Ltd., Kawasaki-shi Kanagawa 210-9530 (JP)
(72) Inventor: TANAKA Yasuhito, Kawasaki-shi Kanagawa 210-9530 (JP)
(74) Representative: MERH-IP Matias Erny Reichl Hoffmann Patentanwälte PartG mbB
(86) International application number: PCT/JP2016/078124
(87) International publication number: WO 2017/086024

(57) **Abstract**

For maintenance, an absorbing tower needs to be removed from an exhaust gas processing apparatus by using a crane and the like. Therefore, for maintenance, an installation space and cost for a crane are needed. Furthermore, an additional work is needed to remove the absorbing tower by way of a crane, which causes an issue of an extended maintenance work time. Provided is an exhaust gas processing apparatus for cleaning an exhaust gas by way of a gas-liquid contact of the exhaust gas and a liquid, the exhaust gas processing apparatus comprising: an absorbing tower provided with a door portion having a side surface at least a portion of which is openable and closable; a trunk tube provided inside of the absorbing tower to transport a liquid inside of the absorbing tower, wherein the trunk tube is dividable at different positions in a height direction of the absorbing tower.

## Description

### BACKGROUND

### TECHNICAL FIELD

The present invention relates to an exhaust gas processing apparatus and a method of taking a divided body of a trunk tube out of an absorbing tower.

Conventionally, an exhaust gas introduced inside of the absorbing tower and a liquid sprayed from a nozzle provided inside of the absorbing tower have been made into a gas-liquid contact to remove sulfur oxide (SOx) and the like contained in the exhaust gas (for example, refer to Patent Documents 1 and 2). Also, the nozzle and a trunk tube which supplies the nozzle with the liquid have been integrally configured (for example, refer to Patent Document 2).

### [Prior Art Document]

### [Patent Document]

[Patent Document 1] Japanese Patent Application Publication No. H06-190240
[Patent Document 2] Japanese Patent Application Publication No. H08-281055

The nozzle provided inside of the absorbing tower needs maintenance on a regular basis. For maintenance of the nozzle, the absorbing tower needs to be removed from the exhaust gas processing apparatus by using a crane and the like. Therefore, for maintenance, an installation space and an installation cost for a crane are needed. Furthermore, an additional work is needed to remove the absorbing tower by way of a crane, which causes an issue of an extended maintenance work time.

### SUMMARY

(General disclosure of the invention) An exhaust gas processing apparatus for cleaning an exhaust gas by way of a gas-liquid contact of the exhaust gas and a liquid may comprise an absorbing tower and a trunk tube. The absorbing tower may be provided with a door portion which opens and closes at least a portion of the side surface. The trunk tube may be provided inside of the absorbing tower. The trunk tube may transport a liquid inside of the absorbing tower. The trunk tube may be dividable at different positions in the height direction of the absorbing tower.

The exhaust gas processing apparatus may further comprise a moving mechanism. The moving mechanism may move a top portion of the trunk tube in the height direction inside of the absorbing tower, in the height direction and a reverse direction of the height direction.

The exhaust gas processing apparatus may further comprise a support portion. The support portion may be provided on an inner side wall of the absorbing tower. The moving mechanism may include a support board and a first fixing member. The support board may be fixed to the support portion. The first fixing member may be arranged to penetrate through at least one opening in the support board. The first fixing member may be engaged into a concave portion of the top portion of of the trunk tube. The first fixing member may be rotated relative to the top portion of the trunk tube to move the top portion of the trunk tube.

The moving mechanism may further comprise a nut. The first fixing member may penetrate through the nut. The nut may be positioned between the support board and the top portion of the trunk tube.

The exhaust gas processing apparatus may further comprise a support portion and two or more struts. The support portion may be provided in an exit tube. The exit tube may be positioned in the top portion of the absorbing tower in which the door portion is not provided. Two or more struts may extend from the support portion toward the top portion of the trunk tube. Two or more struts may be coupled to the support portion. The moving mechanism may include a support board and a first fixing member. The support board may be fixed to two or more struts. The first fixing member may be arranged to penetrate through at least one opening in the support board. The first fixing member may be engaged into a concave portion of the top portion of of the trunk tube. The first fixing member may be rotated relative to the top portion of the trunk tube to move the top portion of the trunk tube.

The exhaust gas processing apparatus may also comprise three struts. Three struts may also be provided in symmetric positions relative to a center position of the trunk tube.

The support board may include a wider portion and a plurality of straight line portions. The wider portion may be positioned above the trunk tube. The wider portion may include a plurality of openings. A plurality of straight line portions may extend from the wider portion and have end portions each of which is fixed to the support portion. The top portion of the trunk tube may include a plurality of concave portions at positions corresponding to a plurality of openings.

The exhaust gas processing apparatus may include a plurality of first fixing members. When the door portion is opened to view a plurality of first fixing members from a predetermined direction of directions orthogonal to the height direction, a plurality of first fixing members engaged into a plurality of the concave portions may be positioned at different positions in a direction orthogonal to both of the height direction and the predetermined direction.

A plurality of straight line portions may include a first straight line portion, a second straight line portion, and a third straight line portion. The second straight line portion may be positioned on an extending line of the first straight line portion. The third straight line portion may be orthogonal to to the extending line of the first straight line portion and extend from the wider portion to a direction orthogonal to the height direction.

The exhaust gas processing apparatus may further comprise a plurality of support portions. A plurality of support portion may be provided on an inner side wall of the absorbing tower. Each of a plurality of support portions may include an opening. The moving mechanism may include a second fixing member, a support board, a plurality of third fixing members, and a plurality of movement nuts. The second fixing member may be fixed to the top portion of the trunk tube. The support board has a central portion which may be fixed to the top portion of the trunk tube by way of the second fixing member. A plurality of third fixing member may be fixed to an end portion of the support board. A plurality of third fixing members may penetrate through each opening of the plurality of support portions, respectively. A plurality of third fixing members may be engaged into a plurality of movement nuts. A plurality of movement nuts may be provided either between each opening of a plurality of support portions and the support board or at an opposite side of the support board via each opening of a plurality of support portions. A plurality of movement nuts may be rotated relative to a plurality of third fixing members to move the support board and the top portion of the trunk tube.

The exhaust gas processing apparatus may further comprise a plurality of fixing nuts. A plurality of third fixing members may be engaged into a plurality of fixing nuts. A plurality of fixing nuts may be respectively positioned at an opposite side of each of the plurality of movement nuts via each opening of a plurality of support portions.

The exhaust gas processing apparatus may further comprise a plurality of support portions. A plurality of support portions may be provided on an inner side wall of the absorbing tower. Each of a plurality of support portions may include an opening. The moving mechanism may include a second fixing member, a support board, and a fourth fixing member. The second fixing member may be fixed to the top portion of the trunk tube. The support board has a central portion which may be fixed to the top portion of the trunk tube by way of the second fixing member. The support board may be provided at a position in a direction opposite to the height direction compared to a plurality of support portions. The fourth fixing member may be engaged into either a concave portion or an opening at an end portion of the support board. The fourth fixing member may be rotated relative to either the concave portion or the opening of the support board to move the support board and the top portion of the trunk tube.

The exhaust gas processing apparatus may further comprise a plurality of fixing nuts positioned between a plurality of support portions and the support board, respectively.

The trunk tube may include a plurality of divided bodies. A plurality of divided bodies may each have a length in the height direction depending on a length of the door portion in the height direction.

A method, in an exhaust gas processing apparatus including an absorbing tower, a moving mechanism, and a trunk tube, for taking out of the absorbing tower, a divided body of the trunk tube provided inside of the absorbing tower, may comprise opening a door portion of the absorbing tower, moving, by the moving mechanism, a top portion of the trunk tube in a height direction of the absorbing tower, and taking to outside of the absorbing tower, a divided body of the trunk tube different from the top portion. The absorbing tower may include a door portion which opens and closes at least a portion of the side surface. The trunk tube may be provided inside of the absorbing tower. The trunk tube may be dividable at different positions in the height direction.

The summary clause does not necessarily describe all necessary features of the embodiments of the present invention. The present invention may also be a sub-combination of the features described above.

### BRIEF DESCRIPTION OF THE DRAWINGS

Fig. 1 is a schematic view illustrating a side surface of an exhaust gas processing apparatus 100.
Fig. 2 is an enlarged diagram of a divided tube 13-1 in the first embodiment.
Fig.3A is a diagram illustrating an upper surface of the exhaust gas processing apparatus 100 in the first embodiment.
Fig.3B is a diagram illustrating a door portion 16-1 in an opened state in the first embodiment.
Fig.3C is a diagram illustrating a case in which one support portion 19 is provided in the first embodiment.
Fig. 4(a) is a diagram illustrating a divided body 22-1 being elevated. (b) is a diagram illustrating a divided body 22-2 being taken out of the door portion 16-2.
Fig. 5 is a diagram illustrating a flow chart 200 of maintenance of the trunk tube 20.
Fig. 6 is a diagram illustrating a modification example of the first embodiment.
Fig. 7 is an enlarged diagram of the divided body 22-1 in the second embodiment.
Fig. 8A is a schematic view illustrating an upper surface of the exhaust gas processing apparatus 100 in the second embodiment.
Fig. 8B is a diagram illustrating a case in which one support portion 72 is provided in the second embodiment.
Fig. 9 is a schematic view illustrating an upper surface of the exhaust gas processing apparatus 100 in the third embodiment.
Fig. 10 is an enlarged diagram of a divided tube 13-1 in the third embodiment.
Fig. 11 is a schematic view illustrating an upper surface of the exhaust gas processing apparatus 100 in a modification example of the third embodiment.
Fig. 12 is a schematic view illustrating an upper surface of the exhaust gas processing apparatus 100 in the fourth embodiment.
Fig. 13 is an enlarged diagram of the divided tube 13-1 in the fifth embodiment.
Fig. 14 is a diagram illustrating a case in which a fixing nut 54 is used in the fifth embodiment.
Fig. 15 is a diagram illustrating a modification example of the fifth embodiment.
Fig. 16 is an enlarged diagram of the divided tube 13-1 in the sixth embodiment.
Fig. 17 is a diagram illustrating a modification example of the sixth embodiment.
Fig. 18 is a diagram illustrating a case in which a fixing nut 54 is used in the sixth embodiment.
Fig. 19 is a diagram illustrating a case in which a fixing nut 54 is used in a modification example of the sixth embodiment.

### DESCRIPTION OF THE EMBODIMENTS

Hereinafter, the present invention will be described through embodiments of the invention. However, the following embodiments are not to limit the claimed inventions. Also, all of the combinations of the characteristics described in the embodiments are not necessarily required for means for solving the problem of the invention.

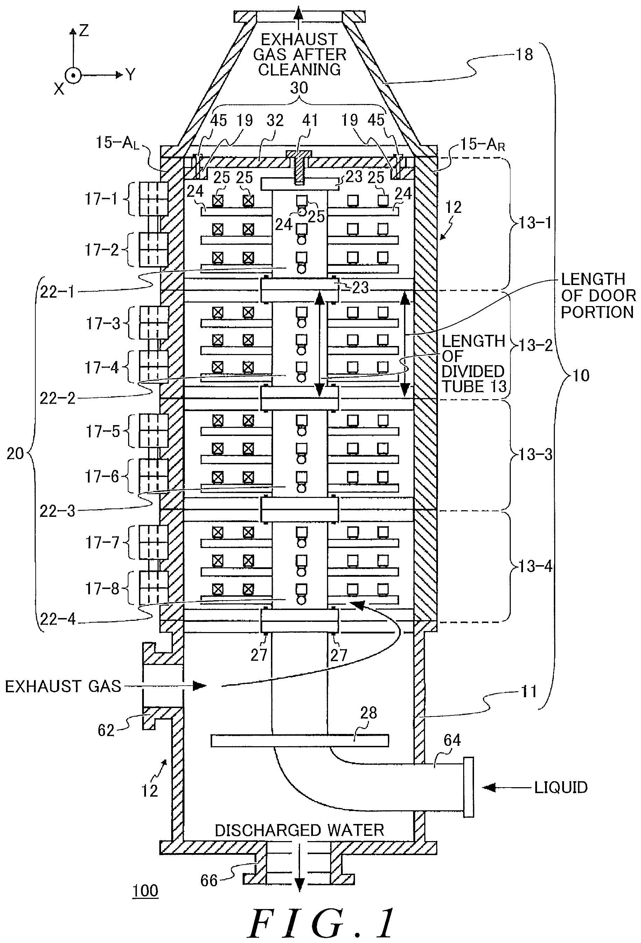

Fig. 1 is a schematic view illustrating a side surface of an exhaust gas processing apparatus 100. The exhaust gas processing apparatus 100 of the present example comprises an absorbing tower 10, a trunk tube 20, and a moving mechanism 30. Note that Fig. 1 illustrates the absorbing tower 10 and the moving mechanism 30 through a side surface view of a cross section in order to facilitate the understanding. However, a hinge portion 17 and the trunk tube 20 sre shown through an ordinary side surface view.

Note that in the present example the coordinate axis is defined as illustrated in Fig. 1. That is, a longitudinal direction of the exhaust gas processing apparatus 100 is referred to as the Z axis direction. A direction orthogonal to the Z axis and toward the front side of the paper is referred to as the positive direction of the X axis. A direction orthogonal to the X axis and the Z axis is referred to as the Y axis and the positive direction of the Y axis is defined by the right hand system. In the following descriptions, the positive direction of the Z axis is referred to as up, above or a height direction of the trunk tube 20. Also, the negative direction of the Z axis is referred to as under, below or a reverse direction of the height direction of the trunk tube 20.

The absorbing tower 10 includes an introducing tube 11, a plurality of divided tubes 13, and an exit tube 18. The exit tube 18 is positioned in a top portion of the absorbing tower 10 in which a door portion is not provided. The exit tube 18 has a function to guide an exhaust gas passing through a plurality of divided tubes 13 to the external air.

The introducing tube 11 includes an exhaust gas introducing portion 62, a liquid introducing portion 64, an exhaust liquid emitting portion 66, and a baffle 28. The introducing tube 11 configures a cylindrical inner space. The exhaust gas is introduced from a motor and the like to the exhaust gas introducing portion 62. The exhaust gas introducing portion 62 is provided along a tangential direction of an outer diameter of the introducing tube 11 such that the exhaust gas is introduced along an inner side wall of the introducing tube 11. Specifically, the exhaust gas introducing portion 62 is provided to extend in a tangential direction of an outer diameter of the introducing tube 11. The exhaust gas introduced to the introducing tube 11 is elevated rotatedly in a spiral manner inside of the absorbing tower 10.

The liquid introducing portion 64 is provided in the vicinity of a bottom portion of the introducing tube 11. The liquid introducing portion 64 introduces a liquid for cleaning the exhaust gas into the introducing tube 11. The liquid introducing portion 64 couples to a divided body 22-4 of the trunk tube 20. This allows the liquid for cleaning the exhaust gas to be supplied from the liquid introducing portion 64 to the trunk tube 20.

In the present embodiment, the liquid for cleaning the exhaust gas is sea water taken from the surrounding environment of the ship. Note that the liquid for cleaning the exhaust gas is not limited to sea water. The liquid may also be lake water, river water, or an alkaline liquid prepared beforehand for cleaning the exhaust gas, and the like.

The baffle 28 is provided approximately orthogonal to a center axis of the introducing tube 11. The baffle 28 is provided below the exhaust gas introducing portion 62. The baffle 28 has a function to separate the inner portion of the introducing tube 11 into a region to which the exhaust gas is introduced and a region which store the used exhaust liquid. The exhaust liquid emitting portion 66 is provided in a bottom portion of the introducing tube 11. The exhaust liquid emitting portion 66 has a function to emit the liquid after a cleaning process of the exhaust gas to outside of the introducing tube 11.

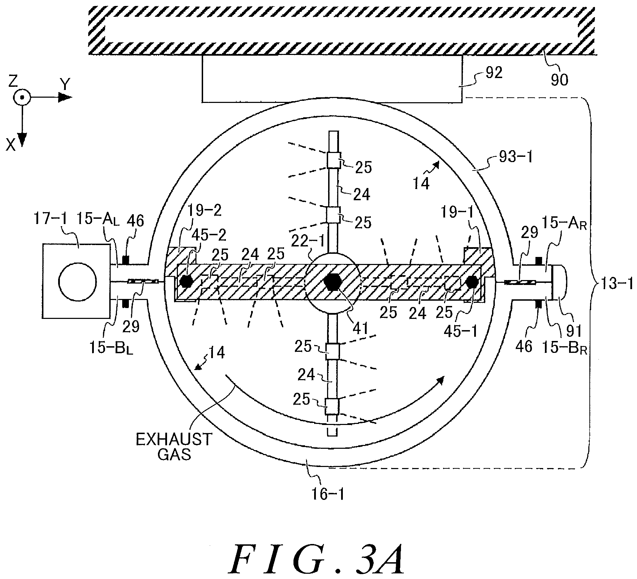

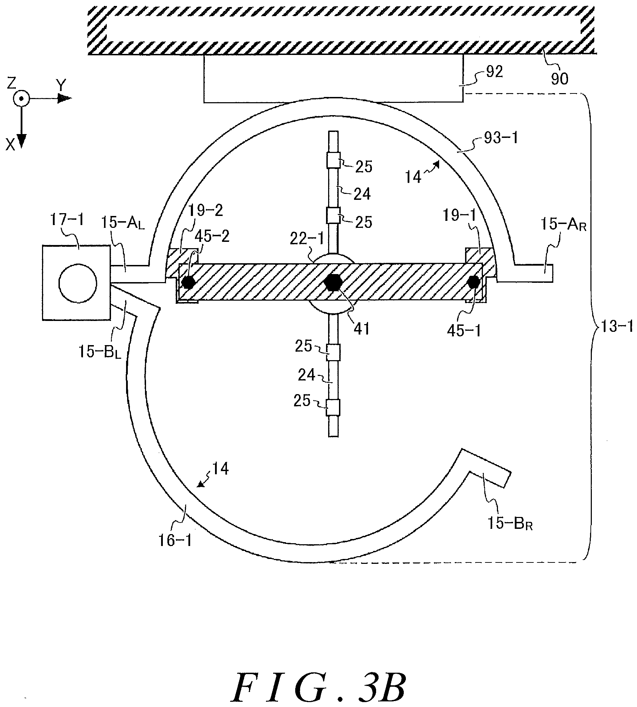

The absorbing tower 10 includes a cylindrical side surface 12. The side surface 12 is provided with a door portion which opens and closes at least a portion of the side surface 12. The side surface 12 of the absorbing tower 10 is also an outer side surface of a plurality of divided tubes 13 stacked in the Z axis direction. The divided tube 13 of the present example includes a fixed portion fixed in the negative direction of the X axis and a door portion openable and closable in the positive direction of the X axis. However, Fig. 1 illustrates a state in which the door portion is removed while the fixed portion remains. For details of the door portion and the fixed portion, refer to Fig.3A and Fig.3B.

A plurality of divided tubes 13 configure a cylindrical inner space, respectively. A plurality of divided tubes 13 are coupled in the height direction and water-tight sealed to one another by way of a fixing member, a gasket, sealing material and the like. A stack of a plurality of divided tubes 13 may have a total length of 3 m in the height direction and may have a diameter of 700 mm. Such an absorbing tower 10 is particularly suitable for a ship and the like which cannot provide a sufficient installation region of the exhaust gas processing apparatus 100.

A planar j oint portion 15 is provided at both end portions of the divided tube 13 in a diameter direction. A planar joint portion 15-A_{L} at one end is provided with a hinge portion 17. A planar joint portion 15-A_{R} at the other end is an openable end portion. The hinge portion 17 rotatably couples the fixed portion and the door portion. The hinge portion 17 may be a so-called hinge. The fixed portion and the door portion include a planar joint portion 15, respectively. When the door portion is in a closed state, the planar joint portion 15-A_{R} of the fixed portion and the planar joint portion 15-A_{R} of the door portion contact each other.

The trunk tube 20 is provided inside of the absorbing tower 10. The trunk tube 20 has a function to transport the liquid introduced from the liquid introducing portion 64, inside of the absorbing tower 10. The trunk tube 20 of the present example is a tube to provide a space in which the liquid moves. The trunk tube 20 itself may not have a pump function to actively pump the liquid up. In the present example, the subject which makes the liquid flow may be a pump and the like provided outside the absorbing tower 10.

The trunk tube 20 of the present example includes a plurality of divided bodies 22 dividable at different positions in the height direction of the absorbing tower 10. In the present example, four divided bodies 22-1 to 22-4 are coupled in the height direction. A flange 23 at an upper end portion and a lower end portion of each divided body 22 is water-tight sealed by way of a divided body fixing member 27, a gasket, a sealing material and the like. However, the flange 23 at the upper end portion of the divided body 22-1 is not water-tight sealed by way of the divided body fixing member 27 and the like. The flange 23 at the upper end portion of the divided body 22-1 is fixed by way of a male screw 41.

A side surface of the divided body 22 is provided with a plurality of radial branch tubes 24. A plurality of branch tubes 24 may be provided at a regular interval in a circumferential direction of the divided body 22. A plurality of branch tubes 24 are branched from the divided body 22. A plurality of branch tubes 24 form a flow path in which the liquid flows in a plane direction approximately orthogonal to the height direction of the divided body 22. In the present example, one divided body 22 is provided with 12 branch tubes 24. Specifically, in the present example, three branch tubes 24 are provided in the Z axis direction and one branch tube 24 is provided in each of the positive directions and the negative directions of the X axis and the Y axis.

The branch tube 24 of the present example is provided with a plurality of spraying portions 25. The spraying portions 25 may be provided at a regular interval in a longitudinal direction of the branch tube 24. The spraying portion 25 includes a spraying port on a surface with a cross mark in Fig. 1 and sprays the liquid for cleaning the exhaust gas from the spraying port. The spraying portion 25 may be a spray nozzle which dispersedly sprays the liquid conically. In the present example, one branch tube 24 is provided with two spraying portions 25. The exhaust gas processing apparatus 100 of the present example makes the exhaust gas introduced from the introducing tube 11 and the liquid dispersedly sprayed from the spraying portion 25 in a gas-liquid contact, thereby cleaning the exhaust gas. The material of the branch tube 24 and the spraying portion 25 may be a stainless steel (so-called SUS) to obtain an anticorrosion characteristic.

A plurality of divided bodies 22 each have a length in the height direction depending on a length of the door portion in the height direction. In the present example, the length of the door portion in the height direction is equal to the length of the fixed portion in the height direction. Also, the length of the divided body 22 of the present example in the height direction is equal to or shorter than the length of the door portion and the fixed portion in the height direction. This allows the divided body 22 to move in approximately parallel to the X-Y plane, thereby taking the divided body 22 to outside of the absorbing tower 10 from the door portion. Note that in the present example, the length of the divided body 22 in the height direction refers to a length of the divided body 22 and the flanges 23 on and under the divided body 22.

The moving mechanism 30 of the present example includes a support board 32, a support portion 19, a male screw 41 as a first fixing member, and a support portion fixing member 45. The moving mechanism 30 has a function to move the divided body 22-1 in the height direction and the reverse direction of the height direction inside of the absorbing tower 10. Note that the top portion of the trunk tube 20 in the height direction means the divided body 22-1.

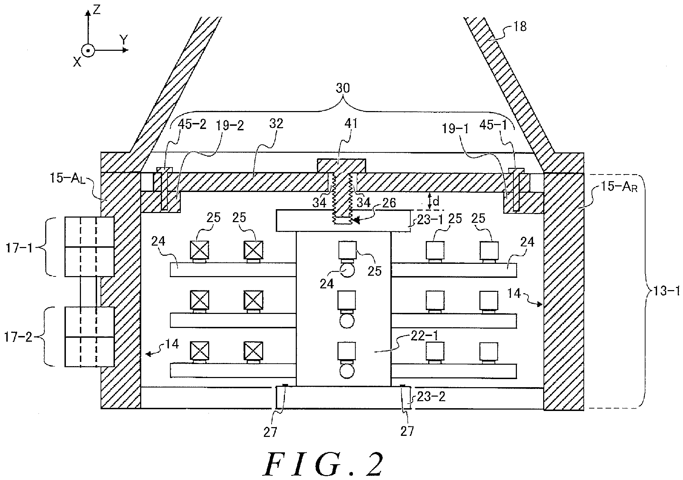

Fig. 2 is an enlarged diagram of the divided tube 13-1 in the first embodiment. Fig. 2 describes the moving mechanism 30 for detail. A plurality of support portions 19 are provided on an inner side wall 14 of the absorbing tower 10. In the present example, two support portions 19 are provided on the inner side wall 14 of the divided tube 13-1. Note that the support portion 19 may not be a plurality of support portions, but may also be one support portion in a flanged shape.

The support board 32 of the present example includes both end portions fixed to two support portions 19 by way of the support portion fixing member 45. The support portion fixing member 45 may be a male screw or may also be a screw member in other shapes. The support board 32 includes at least one opening 34. In the present example, the support board 32 includes one opening 34 at its central portion.

The male screw 41 as the first fixing member includes a head portion and a stem portion. The head portion of the male screw 41 has a diameter larger than the opening 34. The head portion of the male screw 41 is placed to contact the support board 32 directly. The stem portion of the male screw 41 penetrates through the opening 34 without contacting the support board 32. The opening 34 of the present example is so-called a clearance hole relative to a diameter of the stem portion of the male screw 41.

The male screw 41 is engaged into a concave portion 26 provided in the flange 23-1 at the upper end portion of the divided body 22-1. The concave portion 26 of the present example is a female screw engaged with the male screw 41. The male screw 41 has a function to be rotated araound the divided body 22-1 to move the divided body 22-1 in the height direction or the reverse direction of the height direction. In the present example, when the male screw 41 is rotated in a fastening direction, the divided body 22-1 can be moved in the height direction. This allows a distance d between the support board 32 and the flange 23-1 to be shorter. Also, when the male screw 41 is rotated in a releasing direction, the divided body 22-1 can be moved in the reverse direction of the height direction. This allows the distance d to be longer.

Fig.3A is a diagram illustrating an upper surface of the exhaust gas processing apparatus 100 in the first embodiment. Note that in Fig.3A, the exit tube 18 is omitted and the branch tube 24 and the spraying portion 25 positioned under the support board 32 are illustrated by dashed lines in order to facilitate the understanding. The dashed line extending from the spraying portion 25 schematically illustrates a sprayed liquid. The spraying portion 25 may spray the liquid in a direction almost the same as a flow direction of the exhaust gas to help a rotating flow of the exhaust gas.

The hinge portion 17-1 of the present example rotatably couples the fixed portion 93-1 and the door portion 16-1 of the divided tube 13-1. Specifically, the hinge portion 17-1 rotatably couples the planar joint portion 15-A_{L} of the fixed portion 93-1 and the planar joint portion 15-B_{L} of the door portion 16-1. Also, the fixed portion 93-1 of the present example is fixed to an installation rack 92 provided on the ship wall 90. The planar joint portion 15-A_{L} of the fixed portion 93-1 and the planar joint portion 15-B_{L} of the door portion 16-1 are water-tight sealed by way of a door portion fixing member 46 with a gasket 29 provided therebetween. The planar joint portion 15-A_{R} and the planar joint portion 15-B_{R} are also water-tight sealed with a gasket provided therebetween. An outer side of the planar joint portion 15-A_{R} and the planar joint portion 15-B_{R} in which the hinge portion 17-1 are not provided may be sealed by way of a silicon sealing material 91. This allows the planar joint portions 15 to be water-tight sealed with each other further effectively.

Fig.3B is a diagram illustrating the door portion 16-1 in an opened state in the first embodiment. The door portion 16-1 may be opened after the gasket 29, the door portion fixing member 46 and the sealing material 91 are removed.

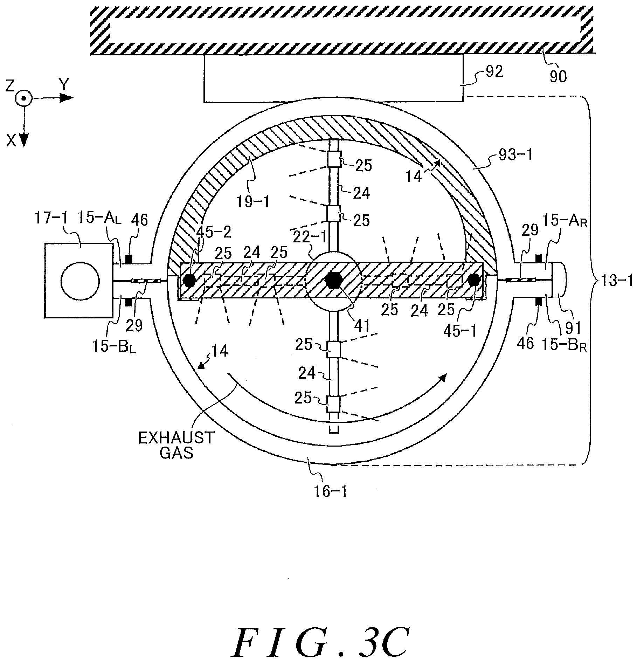

Fig.3C is a diagram illustrating a case in which one support portion 19 is provided in the first embodiment. As described above, the support portion 19 may be in a flanged shape. That is, the support portion 19 may be one support portion, rather than a plurality of support portions.

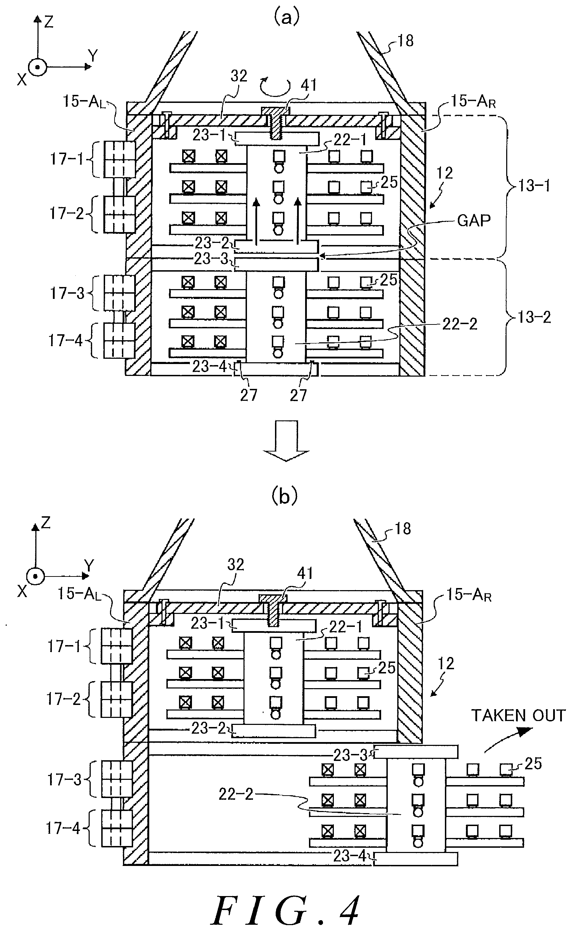

Fig. 4(a) is a diagram illustrating the divided body 22-1 being elevated. First, the door portion 16-1 is opened to elevate the divided body 22-1. Thereafter, the divided body fixing member 27 is removed. Thereafter, the male screw 41 is rotated in a fastening direction to elevate the divided body 22-1 in the height direction. This allows a gap to be formed between the divided body 22-1 and the divided body 22-2.

Fig. 4(b) is a diagram illustrating the divided body 22-2 being taken out of the door portion 16-2. First, the door portion 16-2 of the divided tube 13-2 is opened. Thereafter, the divided body fixing member 27 is removed. Thereafter, the divided body 22-2 is moved in approximately parallel to the X-Y plane. Similarly, each divided body 22 of the trunk tube 20 is taken out, respectively, which allows for maintenance of the divided body 22, the branch tube 24 and the spraying portion 25. Also, only the divided body 22-1 may be taken out for maintenance. In this case, the divided body 22-1 in taken out by removing the divided body fixing member 27 and rotating the male screw 41 in the releasing direction.

The divided body 22 may have a weight to the extent that an operator moves the divided body 22 in or out on one's own. The number of the divided bodies 22 into which the trunk tube 20 is divided may also be determined considering the weight of one divided body 22. In this way, in the present example, the divided body 22-2 can be taken out of the absorbing tower 10 without using a crane. As maintenance can be performed on the trunk tube 20 even without a crane, there is no need for an installation space of a crane. Also, there is no need for an installation cost of a crane. Further, as the absorbing tower 10 is not removed by way of a crane, a maintenance time can be shortened by the time required for the work.

Particularly, the spraying performance of the spraying portion 25 is easily degraded. The spraying performance of the spraying portion 25 is degraded due to corrosion, deformation and the like of a spraying port. Degradation of the spraying performance means that the spraying profile (dispersion angle, particle diameter, spraying amount per unit time) of the spraying characteristic of the sprayed liquid largely differs from a predetermined value. To return the spraying performance to the predetermined value, the trunk tube 20 needs maintenance on a regular basis. The maintenance of the trunk tube 20 refers to taking the divided body 22 of the trunk tube 20 to outside of the absorbing tower 10, replacing at least either the spraying portion 25 or the branch tube 24 to maintain the spraying performance, and the like.

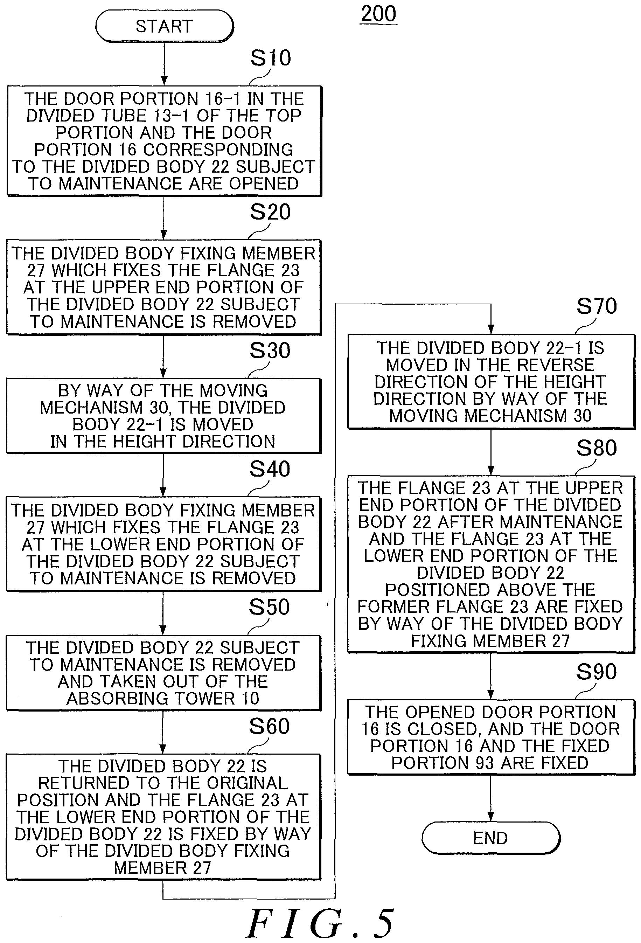

Fig. 5 is a diagram illustrating a flow chart 200 of maintenance of the trunk tube 20. Note that in the present example, maintenance of the divided body 22-2 of the trunk tube 20 is described as an example. First, at least the door portion 16-1 in the divided tube 13-1 of the top portion and the door portion 16 corresponding to the divided body 22 subject to maintenance are opened (S10). In the present example, the door portion 16-1 and the door portion 16-2 are opened.

Subsequent to S10, the divided body fixing member 27 which fixes the flange 23 at the upper end portion of the divided body 22 subject to maintenance is removed (S20). This allows coupling with the divided body 22 positioned above the divided body 22 subject to maintenance to be released. In the present example, the divided body fixing member 27 which fixes the flange 23-3 at the upper end portion of the divided body 22-2 and the flange 23-2 at the lower end portion of the divided body 22-1 is removed.

Subsequent to S20, using the moving mechanism 30, the divided body 22-1 is moved in the height direction inside of the absorbing tower 10 (S30). Specifically, the male screw 41 is rotated in the fastening direction while holding the divided body 22-1 such that the divided body 22-1 is not rotated. An operator may rotate the male screw 41 by rotating a wrench and the like. This allows the divided body 22-1 to be moved up. The divided body 22-1 at the top portion of the trunk tube 20 is moved up, which allows a gap to be formed between the divided body 22-1 and the divided body 22-2.

Subsequent to S30, the divided body fixing member 27 which fixes the flange 23 at the lower end portion of the divided body 22 subject to maintenance is removed (S40). This allows coupling between the divided body 22 subject to maintenance and the divided body 22 positioned under the divided body 22 subject to maintenance to be released. In the present example, coupling between the divided body 22-2 and the divided body 22-3 positioned under the divided body 22-2 is released. More specifically, the divided body fixing member 27 which fixes the flange 23-4 at the lower end portion of the divided body 22-2 and the flange 23 at the upper end portion of the divided body 22-3 is removed.

Subsequent to S40, the divided body 22 subject to maintenance is removed and taken to outside of the absorbing tower 10 (S50). In the present example, the divided body 22-2 which is different from the divided body 22-1 is taken to outside of the absorbing tower 10. This allows maintenance to be performed on the divided body 22-2 outside of the absorbing tower 10.

Subsequent to S50, the divided body 22 after maintenance is returned to the original position and the flange 23 at the lower end portion of the divided body 22 is fixed by way of the divided body fixing member 27 (S60). In the present example, the divided body 22-2 is returned to a given position in the divided tube 13-2 and the flange 23-4 at the lower end portion of the divided body 22-2 and the flange 23 at the upper end portion of the divided body 22-3 are fixed by way of the divided body fixing member 27 again. Note that a gasket may also be provided between the flange 23-4 and the flange 23 at the upper end portion of the divided body 22-3. Further, an outer side of a joint portion of the fixed flanges 23 may be sealed by way of a sealing material.

Subsequent to S60, inside of the absorbing tower 10, the divided body 22-1 is moved in the reverse direction of the height direction by way of the moving mechanism 30 (S70). Specifically, the male screw 41 is rotated in the releasing direction while holding the divided body 22-1 not to be rotated. This allows the divided body 22-1 to be moved down. As the divided body 22-1 is moved down, the flange 23 at the upper end portion of the divided body 22 after maintenance and the flange 23 at the lower end portion of the divided body 22 positioned above the divided body 22 after maintenance are in contact. In the present example, the flange 23-3 at the upper end portion of the divided body 22-2 and the flange 23-2 at the lower end portion of the divided body 22-1 are in contact with a gasket provided therebetween.

Subsequent to S70, the flange 23 at the upper end portion of the divided body 22 after maintenance and the flange 23 at the lower end portion of the divided body 22 positioned above the former flange 23 are fixed by way of the divided body fixing member 27 (S80). Further, an outer side of a joint portion of the fixed flanges 23 may also be sealed by way of a sealing material. In the present example, the flange 23-3 at the upper end portion of the divided body 22-2 and the flange 23-2 at the lower end portion of the divided body 22-1 are fixed by way of the divided body fixing member 27 and the outer side of the joint portion of the fixed flanges 23 is sealed by way of a sealing material.

Subsequent to S80, the opened door portion 16 is closed, and the door portion 16 and the fixed portion 93 are fixed (S90). In the present example, the door portions 16-1 and 16-2 are closed, the door portion 16-1 and the fixed portion 93-1 are fixed by way of the door portion fixing member 46, and the door portion 16-2 and the fixed portion 93-2 are fixed. When the door portion 16 is closed, a gasket may also be provided between the planar joint portion 15-B_{R} of the door portion 16 and the planar joint portion 15-A_{R} of the corresponding fixed portion 93. Also, an outer side of a joint portion of the planar joint portion 15-B_{R} and the planar joint portion 15-A_{R} may be sealed by way of a sealing material. As described above, maintenance of the trunk tube 20 is completed.

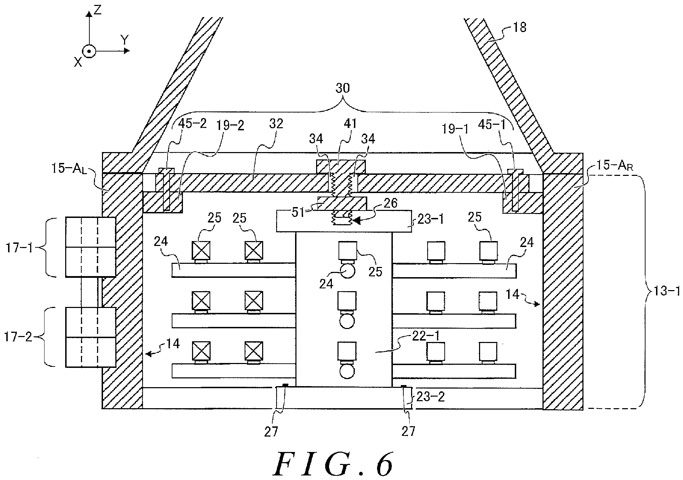

Fig. 6 is a diagram illustrating a modification example of the first embodiment. The moving mechanism 30 of the present example further includes a nut 51 through which the male screw 41 penetrates. The nut 51 is positioned between the support board 32 and the divided body 22-1 at the top portion of the trunk tube 20. The present example is different from the first embodiment in these points. The present example is the same as the first embodiment in other points. The nut 51 allows the trunk tube 20 and the male screw 41 to be fixed to each other more tightly.

The absorbing tower 10 may be placed laterally and tilted relative to the gravitational direction when it is moved outside the ship or carried into the ship. That is, the height direction may not be parallel to the gravitational direction. In this case, the divided body 22-1 at the top portion of the trunk tube 20 may be tilted under its own weight. When the trunk tube 20 is tilted, a water-tight seal may be broken, and the branch tube 24 and the spraying portion 25 may be damaged. In the present example, the nut 51 can fix the flange 23-1 and the male screw 41 more tightly, which prevents the trunk tube 20 from being tilted definitely compared to the configuration without the nut 51.

Note that the flow chart 200 described above may be modified if the nut 51 is included. Specifically, between S20 and S30, the method may further comprise releasing the nut 51 fastened to the flange 23-1. In addition, between S80 and S90, the method may further comprise fastening the nut 51 to the flange 23-1.

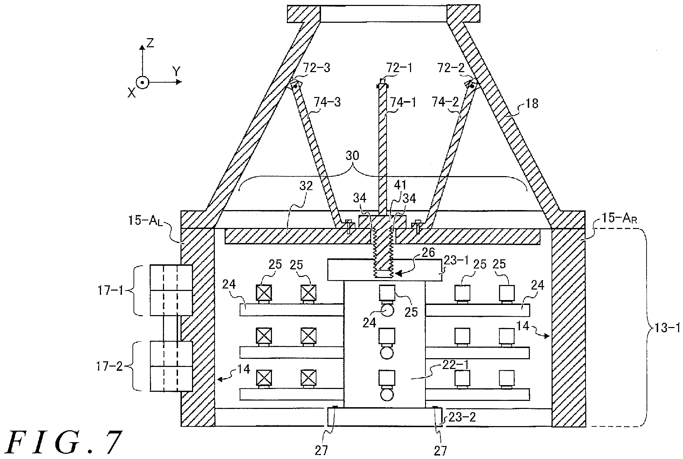

Fig. 7 is an enlarged diagram of the divided body 22-1 in the second embodiment. In the present example, a plurality of support portions 72 provided in the exit tube 18 and two or more struts 74 coupled to a plurality of support portions 72 are further comprised. Note that one strut 74 is coupled to one support portion 72. Two or more struts 74 extend from a plurality of support portions 72 toward the divided body 22-1 and are fixed to the support board 32. In the present example, the exit tube 18 and the support board 32 are fixed by three struts 74. However, the number of the struts 74 is not limited to three, or may also be four or more. In the present example, the support portion 72 provided in the exit tube 18 supports the support board 32. The present example is different from the first embodiment in these points. The configuration of the male screw 41 and the concave portion 26 as the first fixing member is the same as the one in the first embodiment.

The rotating flow of the exhaust gas is elevated rotatedly along the inner side wall 14 in the divided tube 13. On the other hand, the exhaust gas is elevated, but the rotating characteristic is weakened in the exit tube 18. In the present example, rather than the support portion 19, the strut 74 extending from the exit tube 18 fixes the support board 32. Therefore, compared to the first embodiment, it is advantageous to less inhibit the rotating characteristic of the exhaust gas in the divided tube 13. Also, unlike the divided tube 13, the exit tube 18 does not include the door portion 16. That is, the exit tube 18 is not opened or closed. Therefore, the support portion 72 can be provided without considering the position of the door portion 16. Therefore, it allows for a higher degree of freedom for the arrangement design of the strut 74. Note that in the present example, the nut 51 may be provided between the support board 32 and the divided body 22-1 to further increase the strength to fix the trunk tube 20 and the male screw 41.

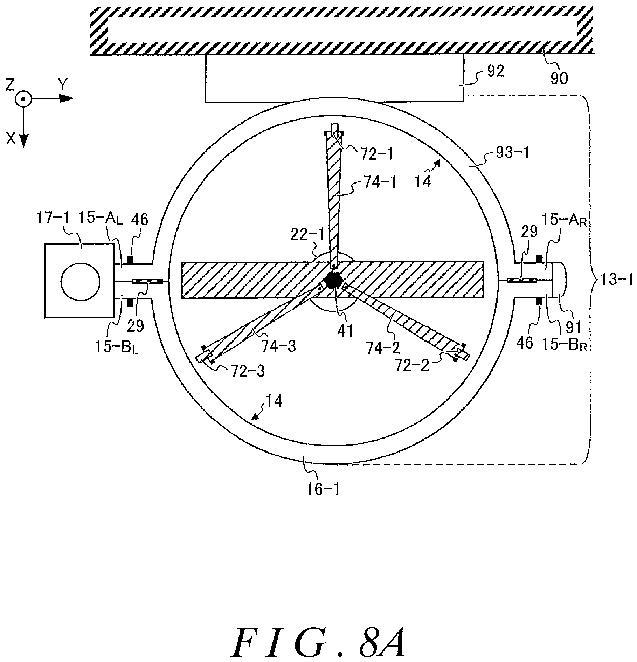

Fig. 8A is a schematic view illustrating an upper surface of the exhaust gas processing apparatus 100 in the second embodiment. In the present example, three struts 74 are provided in symmetric positions relative to a center position of the trunk tube 20. In the present example, the center position of the trunk tube 20 is a position in which the male screw 41 is provided. In a top view, three struts 74 may be provided around the male screw 41 to be spaced apart from one another by 120 degrees in a circumferential direction. Using three struts allows, compared to the first embodiment, the support board 32 to be fixed in a balanced manner and tightly.

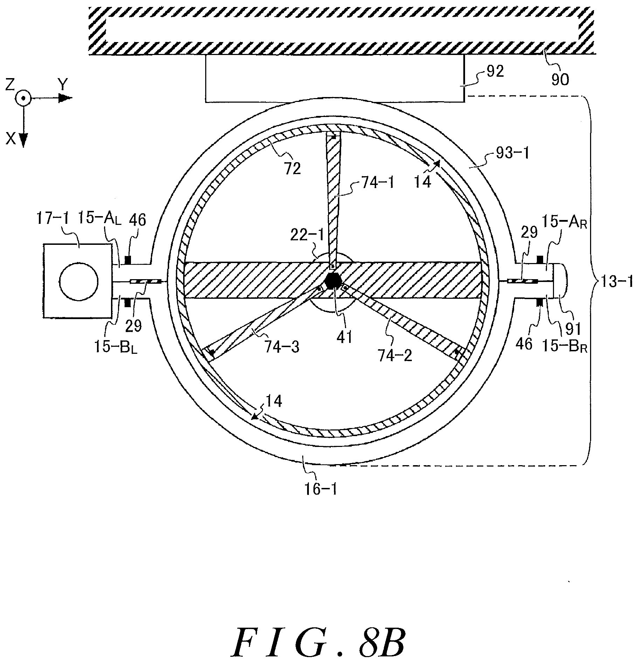

Fig. 8B is a diagram illustrating a case in which one support portion 72 is provided in the second embodiment. As illustrated in Fig. 8B, the support portion 72 may be one support portion of a flanged shape, rather than three independent support portions. Also, in accordance with providing the support portion 72 with a flanged shape, a mechanical connection of the support portion 72 and the strut 74 may be changed as appropriate.

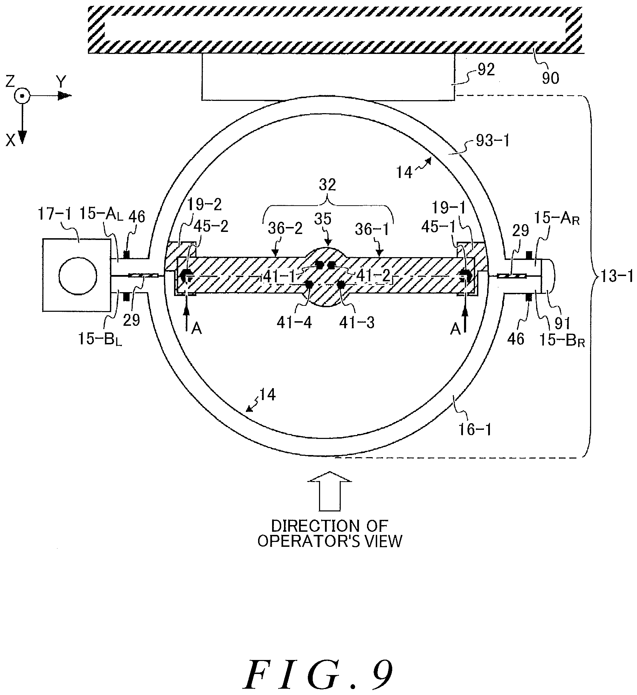

Fig. 9 is a schematic view illustrating an upper surface of the exhaust gas processing apparatus 100 in the third embodiment. The support board 32 of the present example includes a wider portion 35, a plurality of straight line portions 36 extending from the wider portion 35. The wider portion 35 is positioned above the trunk tube 20, that is, above the divided body 22-1. The wider portion 35 includes a plurality of openings 34 and a male screw 41 penetrates through each opening 34. Also, the divided body 22-1 includes a plurality of concave portions 26 at positions corresponding to a plurality of openings 34. Also, in the present example, a plurality of male screws 41 are included. A plurality of male screws 41 are engaged into a plurality of concave portions 26. The present example is different from the first embodiment in these points. The present example is the same as the first embodiment in other points.

The wider portion 35 of the present example may have the same shape as the flange 23, in a top view. The wider portion 35 of the present example has a circular shape. The wider portion 35 is movably fixed to the flange 23-1 at the upper end portion of the divided body 22-1 by way of a plurality of male screws 41. In the present example, as the trunk tube 20 is fixed by way of a plurality of male screws 41, the trunk tube 20 can be fixed more tightly than in the first and second embodiment.

Each of end portions of a plurality of straight line portions 36 extending from the wider portion 35 to the inner side wall 14 side is fixed to a plurality of support portions 19. In the present example, the end portion of the straight line portion 36 is fixed to the support portion 19 by way of the support portion fixing member 45. These points are the same fixing method as those in the first embodiment. Note that in the present example, the nut 51 may be provided between the support board 32 and the divided body 22-1 to further increase the strength to fix the trunk tube 20 and the male screw 41.

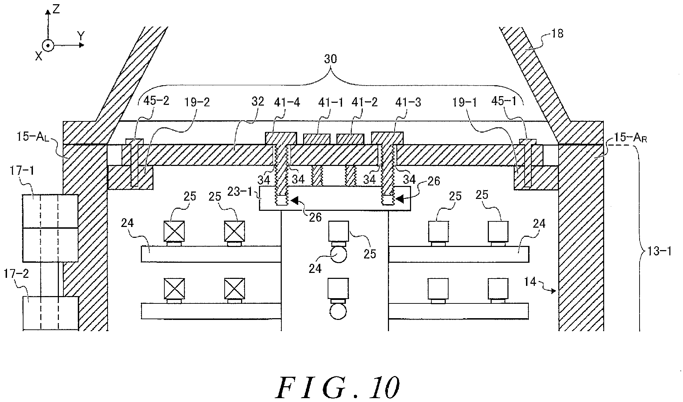

Fig. 10 is an enlarged diagram of a divided tube 13-1 in the third embodiment. When the door portion 16 is opened to view a plurality of male screws 41 from a predetermined direction of directions orthogonal to the height direction, the male screws 41 are positioned at different positions in a direction orthogonal to both of the height direction and the predetermined direction. In the present example, when the door portion 16 is opened to view a plurality of male screws 41 toward the negative direction of the X axis, the male screws 41 are positioned at different positions in the Y direction. This allows head portions of the male screws 41 are not seen overlapped when an operator see the male screws 41 in the negative direction of the X axis. Therefore, it allows an operator to rotate the male screw 41 easily, thereby facilitating maintenance of the trunk tube 20. Note that the second embodiment in which the strut 74 is used may also be applied to the third embodiment.

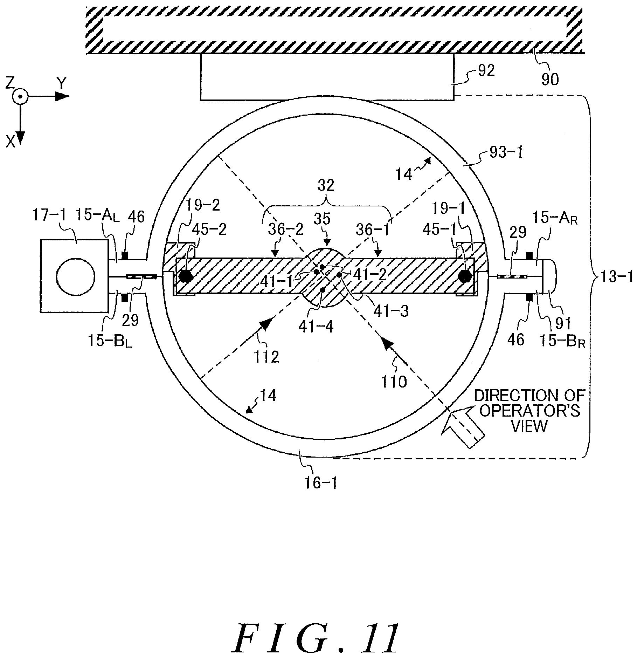

Fig. 11 is a schematic view illustrating an upper surface of the exhaust gas processing apparatus 100 in a modification example of the third embodiment. Note that the branch tube 24 and the spraying portion 25 are omitted considering visibility of the drawings. In the present example, the arrangement of the male screws 41 is different from the one in the third embodiment. In the present example, when the door portion 16 is opened to observe a plurality of male screws 41 from a position between the X axis and the Y axis (observed direction 110), the male screws 41 are positioned at different positions in a direction 112 orthogonal to both of the observed direction 110 and the height direction. The present example is different from the third embodiment in these points. In the present example, even if the door portion 16 is not fully opened, the male screws 41 can be observed such that the head portions of the male screws 41 are not viewed overlapped. Therefore, it is advantageous that the door portion 16 may not be fully opened to rotate the male screws 41. Therefore, if there is no space in the ship for the door portion 16 to be fully opened, the present example is particularly advantageous. Note that the second embodiment in which the strut 74 is used may also be applied to a modification example of the third embodiment.

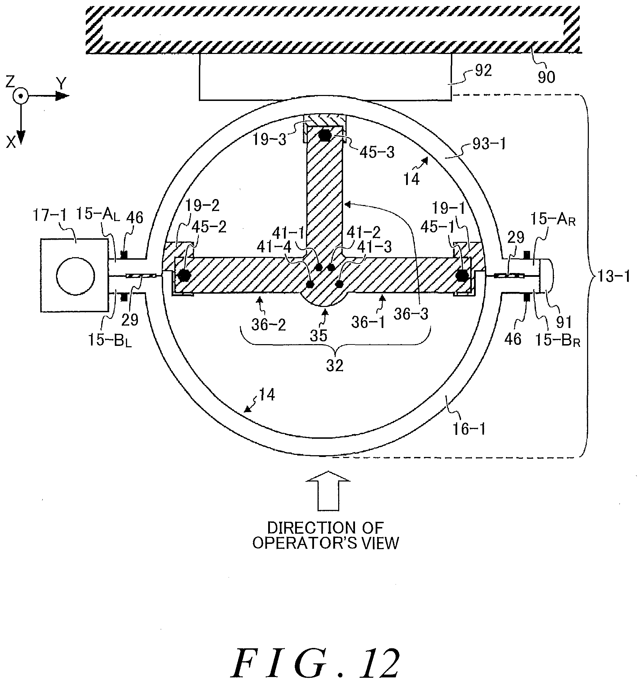

Fig. 12 is a schematic view illustrating an upper surface of the exhaust gas processing apparatus 100 in the fourth embodiment. Note that the branch tube 24 and the spraying portion 25 are omitted for visibility of the drawings. In the present example, a plurality of straight line portions 36 includes a first straight line portion 36-1, a second straight line portion 36-2, and a third straight line portion 36-3. The second straight line portion 36-2 is positioned on an extending line of the first straight line portion 36-1. The third straight line portion is orthogonal to the extending line of the first straight line portion 36-1 and extends from the wider portion 35 in a direction orthogonal to the height direction. In the present example, the strength of the support board 32 can be increased compared to the embodiments described above. Note that the modification example of the third embodiment in which the door portion 16 may not be fully opened may also be applied to the fourth embodiment.

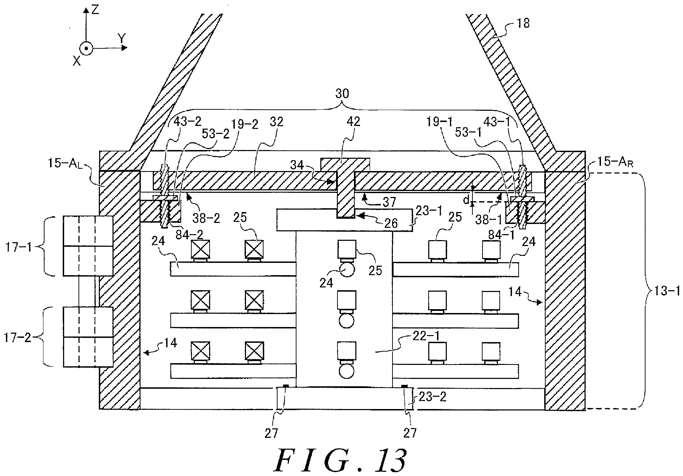

Fig. 13 is an enlarged diagram of the divided tube 13-1 in the fifth embodiment. In the following embodiments, rather than a fixing member such as the male screw directly connected to the divided body 22-1, the divided body 22-1 is moved up and down by using a fixing member such as a male screw positioned in the vicinity of the inner side wall 14 and a nut. These points are mainly different from those in the first to the fourth embodiments.

The moving mechanism 30 of the present example includes a male screw 42 as a second fixing member, a support board 32, male screws 43 as a plurality of third fixing members, and a plurality of movement nuts 53. The male screw 42 is fixed to the divided body 22-1.

The male screw 42 of the present example is engaged into an opening 34 in a central portion 37 of the support board 32 and a concave portion 26 provided in the flange 23. The opening 34 of the present example may not be a clearance hole. In the present example, the divided body 22-1 is not moved up and down by using the male screw 42. The male screw 42 of the present example is used to fix the central portion 37 of the support board 32 and the divided body 22-1.

The male screw 43 is screwed into and fixed to an end portion 38 of the support board 32. The male screw 43 is not movable relative to the support board 32. As the male screw 43 of the present example is not expected to be rotated by itself, it is set as a male screw including only a stem portion. The inner side wall 14 of the absorbing tower 10 is provided with a plurality of support portions 19. In the present example, each opening 84 of a plurality of support portions 19 is a female screw engaged with the male screw 43.

A plurality of male screws 43 are also engaged into a plurality of movement nuts 53. In the present example, the movement nut 53 is provided between each opening 84 of a plurality of support portions 19 and the support board 32. The movement nut 53 may have a hexagonal contour or may also have other polygonal contours in a top view. When the movement nut 53 is rotated relative to the male screw 43 such that the support board 32, the divided body 22-1, the male screw 42 and the male screw 43 can be integrally moved in the height direction and its reverse direction.

In the present example, when the movement nut 53 is rotated to be fastened to the support portion 19 such that the divided body 22-1 can be moved in the height direction. This allows the distance d between the support board 32 and the support portion 19 to be shorter. Also, when the movement nut 53 is rotated in a reverse direction, the divided body 22-1 can be moved in the reverse direction of the height direction. This allows the distance d to be longer. Therefore, the divided body 22-2 can be taken out without using a crane. Therefore, the effect similar to the first embodiment can be obtained. Note that in the flow chart 200 of maintenance, rotating the male screw 41 may be replaced with rotating the movement nut 53.

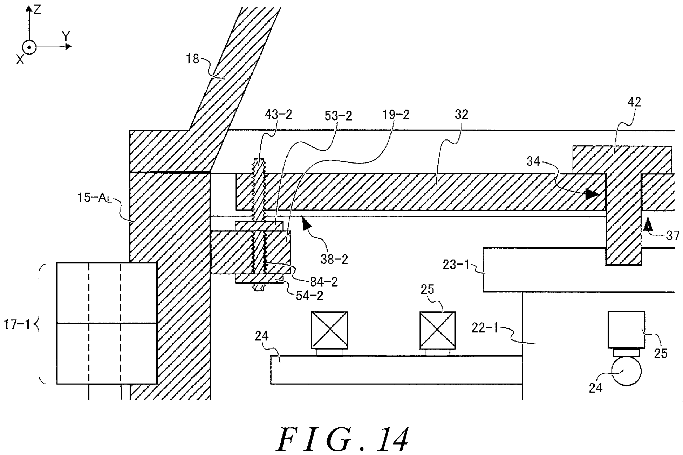

Fig. 14 is a diagram illustrating a case in which a fixing nut 54 is used in the fifth embodiment. The male screw 43 is engaged into the fixing nut 54 of the present example. The fixing nut 54 is positioned at an opposite side of the movement nut 53 via the opening 84 of the support portion 19. In the present example, the support board 32 and the support portion 19 can be fixed more tightly by way of the fixing nut 54. Also, this prevents the trunk tube 20 to be tilted definitely compared to the configuration without the fixing nut 54.

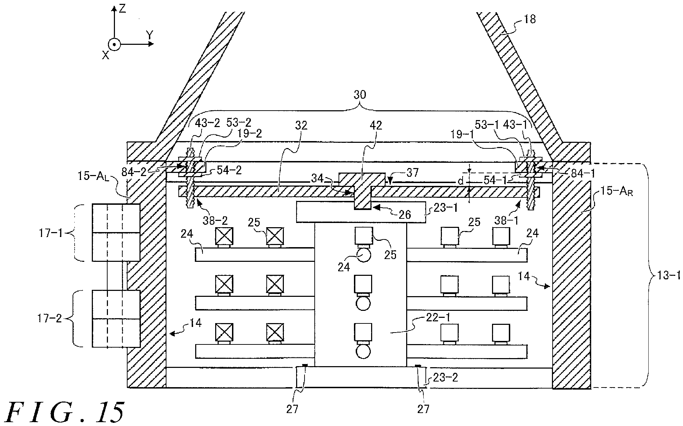

Fig. 15 is a diagram illustrating a modification example of the fifth embodiment. In the present example, the support board 32 is positioned below the support portion 19. Further, the movement nut 53 is provided at an opposite side of the support board 32 via each opening 84 of the support portion 19. This allows the support portion 19 and the male screw 43 to be fixed more tightly. The present example is different from the fifth embodiment in these points. Note that the fixing nut 54 is included in the present modification example, but the fixing nut 54 may also be omitted as in Fig. 13.

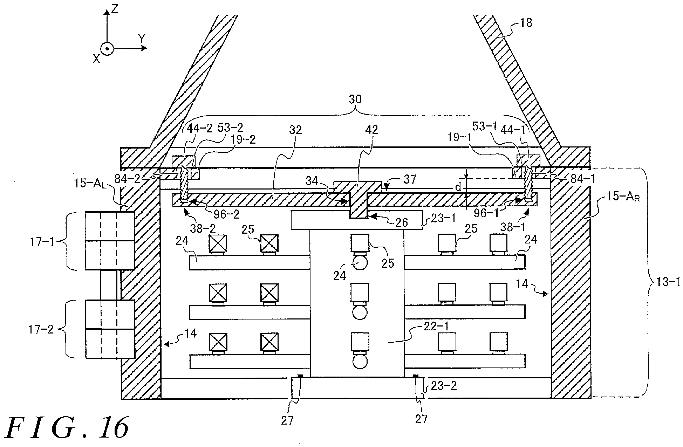

Fig. 16 is an enlarged diagram of the divided tube 13-1 in the sixth embodiment. In the moving mechanism 30 of the present example, the male screw 44 as the fourth fixing member is engaged into the concave portion 96 at the end portion 38 of the support board 32. The male screw 44 is rotated relative to the concave portion 96 of the support board 32 to move the support board 32 and the divided body 22-1 up and down. Also, the opening 84 is so-called a clearance hole. The present example is different from the fifth embodiment in these points. The present example is similar to the fifth embodiment in other points. Note that the support board 32 is provided at a position in the reverse direction of the height direction compared to a plurality of support portions 19.

The male screw 44 of the present example includes a head portion. When the head portion of the male screw 44 is rotated in a fastening direction, the divided body 22-1 can be moved in the height direction. This allows the distance d between the support board 32 and the support portion 19 to be shorter. Also, when the movement nut 53 is rotated in a releasing direction, the divided body 22-1 can be moved in the reverse direction of the height direction. This allows the distance d to be longer. Therefore, the divided body 22-2 can be taken out without using a crane. Therefore, the effect similar to the fifth embodiment can be obtained. Note that in the flow chart 200 of maintenance, rotating the male screw 41 may be replaced with rotating the male screw 44.

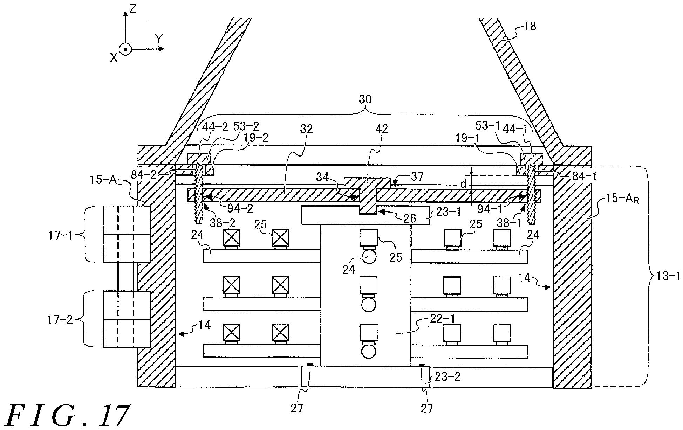

Fig. 17 is a diagram illustrating a modification example of the sixth embodiment. In the present example, the opening 94 is provided at the end portion 38 of the support board 32, and the male screw 44 is engaged into the opening 94. The male screw 44 protrudes in the reverse direction of the height direction compared to the support board 32. The opening 94 of the present example is a female screw engaged with the male screw 44. The present example is different from the sixth embodiment in these points. The present example is the same as the sixth embodiment in other points.

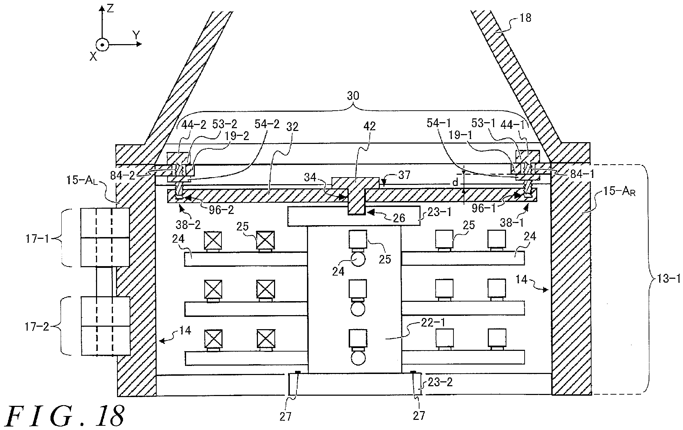

Fig. 18 is a diagram illustrating a case in which a fixing nut 54 is used in the sixth embodiment. That is, the fixing nut 54 positioned between the support portion 19 and the support board 32 is included in the present example. The male screw 44 and the support portion 19 can be fixed more tightly by way of the fixing nut 54. Also, this prevents the trunk tube 20 to be tilted definitely compared to the configuration without the fixing nut 54.

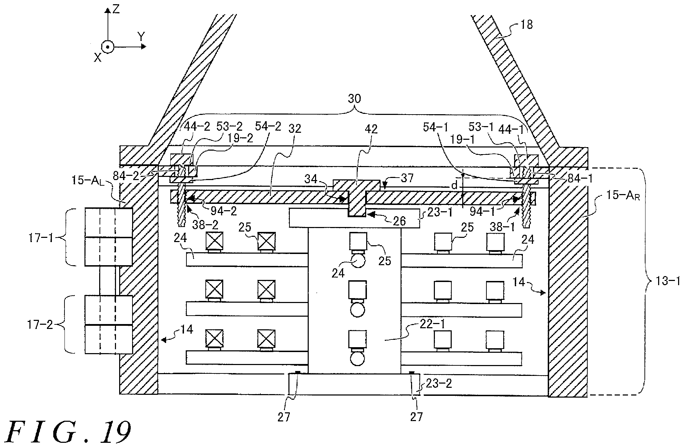

Fig. 19 is a diagram illustrating a case in which a fixing nut 54 is used in a modification example of the sixth embodiment. The fixing nut 54 positioned between the support portion 19 and the support board 32 is also included in the present example. This results in the same effect as in the example in Fig. 18.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: absorbing tower, 11: introducing tube, 12: side surface, 13: divided tube, 14: inner side wall, 15: planar joint portion, 16: door portion, 17: hinge portion, 18: exit tube, 19: support portion, 20: trunk tube, 22: divided body, 23: flange, 24: branch tube, 25: spraying portion, 26: concave portion, 27: divided body fixing member, 28: baffle, 29: gasket, 30: moving mechanism, 32: support board, 34: opening, 35: wider portion, 36: straight line portion, 37: central portion, 38: end portion, 41: male screw, 42: male screw, 43: male screw, 44: male screw, 45: support portion fixing member, 46: door portion fixing member, 51: nut, 53: movement nut, 54: fixing nut, 62: exhaust gas introducing portion, 64: liquid introducing portion, 66: exhaust liquid emitting portion, 72: support portion, 74: strut, 84: opening, 90: ship wall, 91: sealing material, 92: installation rack, 93: fixed portion, 94: opening, 96: concave portion, 100: exhaust gas processing apparatus, 110: observed direction, 112: direction, 200: flow chart

## Claims

1. An exhaust gas processing apparatus for cleaning an exhaust gas by way of a gas-liquid contact of the exhaust gas and a liquid, the exhaust gas processing apparatus comprising:
an absorbing tower provided with a door portion having a side surface at least a portion of which is openable and closable;
a trunk tube provided inside of the absorbing tower to transport a liquid inside of the absorbing tower, wherein the trunk tube is dividable at different positions in a height direction of the absorbing tower.

2. The exhaust gas processing apparatus according to claim 1, further comprising a moving mechanism to move a top portion of the trunk tube in the height direction inside of the absorbing tower, in the height direction and a reverse direction of the height direction.

3. The exhaust gas processing apparatus according to claim 2, further comprising a support portion provided on an inner side wall of the absorbing tower, wherein the moving mechanism includes:
a support board fixed to the support portion; and
a first fixing member arranged to penetrate through at least one opening in the support board and engaged into a concave portion of the top portion of the trunk tube, wherein the first fixing member is rotated relative to the top portion of the trunk tube to move the top portion of the trunk tube.

4. The exhaust gas processing apparatus according to claim 3, wherein the moving mechanism further includes a nut through which the first fixing member penetrates, the nut positioned between the support board and the top portion of the trunk tube.

5. The exhaust gas processing apparatus according to claim 2 further comprising:
a support portion provided in an exit tube positioned in a top portion of the absorbing tower in which the door portion is not provided; and
two or more struts extending toward the top portion of the trunk tube from the support portion and coupled to the support portion, wherein
the moving mechanism includes:
a support board fixed to the two or more struts; and
a first fixing member arranged to penetrate through at least one opening in the support board and engaged into a concave portion of the top portion of the trunk tube, wherein the first fixing member is rotated relative to the top portion of the trunk tube to move the top portion of the trunk tube.

6. The exhaust gas processing apparatus according to claim 5, comprising the three struts, wherein the three struts are provided at symmetric positions relative to a center position of the trunk tube.

7. The exhaust gas processing apparatus according to any one of claims 3 to 6, wherein the support board includes:
a wider portion positioned above the trunk tube and including a plurality of openings; and
a plurality of straight line portions extending from the wider portion and having end portions each of which is fixed to the support portion, and wherein
the top portion of the trunk tube includes a plurality of the concave portions at positions corresponding to the plurality of openings.

8. The exhaust gas processing apparatus according to claim 7, comprising a plurality of the first fixing members, wherein when the door portion is opened to view the plurality of the first fixing members from a predetermined direction of directions orthogonal to the height direction, the plurality of the first fixing members engaged into the plurality of the concave portions are positioned at different positions in a direction orthogonal to both of the height direction and the predetermined direction.

9. The exhaust gas processing apparatus according to claim 7 or 8, wherein the plurality of straight line portions include:
a first straight line portion;
a second straight line portion positioned on an extending line of the first straight line portion; and
a third straight line portion orthogonal to the extending line of the first straight line portion and extending from the wider portion in a direction orthogonal to the height direction.

10. The exhaust gas processing apparatus according to claim 2, further comprising a plurality of support portions provided on an inner side wall of the absorbing tower, each of the plurality of support portions including an opening, wherein the moving mechanism includes:
a second fixing member fixed to the top portion of the trunk tube;
a support board having a central portion fixed to the top portion of the trunk tube by way of the second fixing member;
a plurality of third fixing members fixed to an end portion of the support board and penetrating through each opening of the plurality of support portions, respectively; and
a plurality of movement nuts into which the plurality of third fixing members are engaged, the plurality of movement nuts provided either between each opening of the plurality of support portions and the support board or at an opposite side of the support board via each opening of the plurality of support portions, wherein the plurality of movement nuts are rotated relative to the plurality of third fixing members to move the support board and the top portion of the trunk tube.

11. The exhaust gas processing apparatus according to claim 10, further comprising a plurality of fixing nuts into which the plurality of third fixing members are engaged, the plurality of fixing nuts respectively positioned at an opposite side of each of the plurality of movement nuts via each opening of the plurality of support portions.

12. The exhaust gas processing apparatus according to claim 2, further comprising a plurality of support portions provided on an inner side wall of the absorbing tower, each of the plurality of support portions including an opening, wherein the moving mechanism includes:
a second fixing member fixed to the top portion of the trunk tube;
a support board having a central portion fixed to the top portion of the trunk tube by way of the second fixing member and provided at a position in a direction opposite to the height direction compared to the plurality of support portions;
a fourth fixing member engaged into either a concave portion or an opening at an end portion of the support board and rotated relative to either the concave portion or the opening of the support board to move the support board and the top portion of the trunk tube.

13. The exhaust gas processing apparatus according to claim 12, further comprising a plurality of fixing nuts positioned between the plurality of support portions and the support board, respectively.

14. The exhaust gas processing apparatus according to any one of claims 1 to 13, wherein the trunk tube includes a plurality of divided bodies each having a length in the height direction depending on a length of the door portion in the height direction.

15. A method, in an exhaust gas processing apparatus including an absorbing tower, a moving mechanism, and a trunk tube, for taking out of the absorbing tower, a divided body of the trunk tube provided inside of the absorbing tower, the method comprising:
opening a door portion provided in the absorbing tower, the door portion having a side surface at least a portion of which is openable and closable;
moving, by the moving mechanism, a top portion of the trunk tube provided inside of the absorbing tower in a height direction of the absorbing tower;
taking the divided body to outside of the absorbing tower, wherein the divided body is different from the top portion of the trunk tube dividable at different positions in the height direction.
